# EUROPEAN PATENT APPLICATION

(11) **EP 3 690 384 A1**
(43) Date of publication of application: **05.08.2020**
(21) Application number: 20153615.8
(22) Date of filing: 24.01.2020
(51) Int. Cl.: G01B 5/00, G01C 15/00, G01S 17/42

(54) **STABLE MOBILE PLATFORM FOR COORDINATE MEASUREMENT**

(30) Priority: 01.02.2019 US 201962799913 P
(71) Applicant: Faro Technologies, Inc., Lake Mary, FL 32746-6204 (US)
(72) Inventor: TAHIR, Muhammad Umair, 70619 Stuttgart (DE); ZWEIGLE, Oliver, 70374 Stuttgart (DE); BRIDGES, Robert E., Lake Mary, FL Florida 32746-6204 (US)
(74) Representative: Harris, Oliver John Richard

(57) **Abstract**

Platforms configured to support coordinate measurement devices are described. The platforms include a base plate defining a stable mobile platform, at least one movement device configured to enable movement of the stable mobile platform, at least one stabilizing actuator configured to deploy a stabilizer to engage with a surface, the at least one stabilizing actuator moveable between a deployed state in which the stabilizer contacts a surface and a mobile state in which the at least one movement device contacts the surface, and a platform controller configured to drive movement of the stable mobile platform by controlling operation of the at least one movement device when the at least one stabilizing actuator is in the mobile state.

## Description

### CROSS REFERENCE TO RELATED APPLICATIONS

This application claims the benefit of U.S. Provisional Application Serial No. 62/799,913, filed February 1, 2019, the entire disclosure of which is incorporated herein by reference.

### BACKGROUND OF THE INVENTION

The subject matter disclosed herein relates to coordinate measurement devices and systems, and particularly to stable mobile platforms for use therewith.

The present disclosure relates to coordinate measuring devices and mobile platforms thereof. One set of coordinate measurement devices belongs to a class of instruments that measure three-dimensional (3D) coordinates of a target point by sending a beam of light to the point. The beam of light may impinge directly on the point or on a retroreflector target in contact with the point. In either case, the instrument determines the coordinates of the target point by measuring a distance and two angles to the target. The distance is measured with a distance-measuring device such as an absolute distance meter or an interferometer. The angles are measured with an angle-measuring device such as an angular encoder. The beam may be steered with a gimbaled mechanism, a galvanometer mechanism, or other mechanism.

A laser tracker is a particular type of coordinate-measuring device that tracks a retroreflector target with one or more beams emitted therefrom, which may include light from a laser or non-laser light source. Coordinate-measuring devices closely related to laser trackers are time-of-flight (TOF) scanners and a total station. A TOF scanner steps one or more beams of light to points on a surface. The TOF scanner picks up light reflected from the surface and, in response, determines a distance and two angles to each surface point. A total station is a 3D measuring device most often used in surveying applications. It may be used to measure the coordinates of a diffusely scattering target or a retroreflective target. Hereinafter, the term laser tracker is used in a broad sense to include, but is not limited to, laser scanners and total stations and to include dimensional measuring devices that emit laser or non-laser light.

In many cases, a laser tracker sends a beam of light to a retroreflector target. A common type of retroreflector target is a spherically mounted retroreflector (SMR), which comprises a cube-corner retroreflector embedded within a metal sphere. The cube-corner retroreflector comprises three mutually perpendicular mirrors. The vertex, which is the common point of intersection of the three mirrors, is located at the center of the sphere. Because of this placement of the cube corner within the sphere, the perpendicular distance from the vertex to any surface of the SMR rests remains constant, even as the SMR is rotated. Consequently, the laser tracker can measure the 3D coordinates of a surface by following the position of an SMR as it is moved over the surface. Stating this another way, the laser tracker needs to measure only three degrees of freedom (one radial distance and two angles) to fully characterize the 3D coordinates of a surface.

One type of laser tracker contains only an interferometer (IFM) without an absolute distance meter (ADM). If an object blocks the path of the laser beam from one of these trackers, the IFM loses its distance reference. The operator must then track the retroreflector to a known location to reset to a reference distance before continuing the measurement. A way around this limitation is to put an ADM in the tracker. The ADM can measure distance in a point-and-shoot manner, as described in more detail below. Some laser trackers contain only an ADM without an interferometer.

A gimbal mechanism within the laser tracker may be used to direct a laser beam from the tracker to the SMR. Part of the light retroreflected by the SMR enters the laser tracker and passes on to a position detector. A control system within the laser tracker uses position of the light on the position detector to adjust the rotation angles of the mechanical axes of the laser tracker to keep the beam of light centered on the SMR. In this way, the tracker is able to follow (track) a moving SMR.

Angle measuring devices such as angular encoders are attached to the mechanical axes of the tracker. The one distance measurement and two angle measurements of the laser tracker are sufficient to completely specify a three-dimensional location of the SMR. In addition, several laser trackers are available or have been proposed for measuring six degrees-of-freedom (six-DOF), rather than the ordinary three degrees-of-freedom.

Although laser trackers are generally suitable for their intended purpose, some limitations still exist in tracker complexity, maintenance, resistance to shock, and identification of target objects. Further, at times, it may be beneficial and/or required to move a laser tracker or other coordinate measurement device. When moving a coordinate measurement device, the coordinate system may require resetting or recalibration, and having a system for efficiently moving and maintaining stability of such coordinate measurement devices may be helpful. What is needed is a laser tracker having features to overcome these limitations and provide other features and/or functionality thereto.

### BRIEF DESCRIPTION OF THE INVENTION

According to aspects of the present disclosure, platforms configured to support coordinate measurement devices are provided. The platforms include a base plate defining a stable mobile platform, at least one movement device configured to enable movement of the stable mobile platform, at least one stabilizing actuator configured to deploy a stabilizer to engage with a surface, the at least one stabilizing actuator moveable between a deployed state in which the stabilizer contacts a surface and a mobile state in which the at least one movement device contacts the surface, and a platform controller configured to drive movement of the stable mobile platform by controlling operation of the at least one movement device when the at least one stabilizing actuator is in the mobile state.

In addition to one or more of the features described above, or as an alternative, further embodiments of the platforms for coordinate measurement devices may include a coordinate measurement device mounted to the base plate.

In addition to one or more of the features described above, or as an alternative, further embodiments of the platforms for coordinate measurement devices may include that the base plate is triangular in shape.

In addition to one or more of the features described above, or as an alternative, further embodiments of the platforms for coordinate measurement devices may include three stabilizing actuators, wherein one stabilizing actuator is positioned at each corner of the triangular shape on the base plate.

In addition to one or more of the features described above, or as an alternative, further embodiments of the platforms for coordinate measurement devices may include at least one sensor configured to track a position of the stable mobile platform within an environment, wherein the at least one sensor is configured in communication with the platform controller.

In addition to one or more of the features described above, or as an alternative, further embodiments of the platforms for coordinate measurement devices may include that the at least one sensor is a proximity sensor.

In addition to one or more of the features described above, or as an alternative, further embodiments of the platforms for coordinate measurement devices may include that the at least one sensor is an inertial movement unit.

In addition to one or more of the features described above, or as an alternative, further embodiments of the platforms for coordinate measurement devices may include a support plate arranged proximate to the base plate and connected to the base plate by at least one plate connector to form a stable mobile platform.

In addition to one or more of the features described above, or as an alternative, further embodiments of the platforms for coordinate measurement devices may include at least one sensor configured to track a position of the stable mobile platform within an environment, wherein the at least one sensor is configured in communication with the platform controller, wherein the at least one sensor is mounted to the support plate.

In addition to one or more of the features described above, or as an alternative, further embodiments of the platforms for coordinate measurement devices may include that the at least one movement device is an omni-directional wheel.

In addition to one or more of the features described above, or as an alternative, further embodiments of the platforms for coordinate measurement devices may include that the at least one movement device is a Mecanum wheel.

In addition to one or more of the features described above, or as an alternative, further embodiments of the platforms for coordinate measurement devices may include that the at least one movement device includes a roller element and a drive element.

In addition to one or more of the features described above, or as an alternative, further embodiments of the platforms for coordinate measurement devices may include that the drive element is configured in communication with the platform controller.

In addition to one or more of the features described above, or as an alternative, further embodiments of the platforms for coordinate measurement devices may include that the at least one stabilizing actuator is one of a hydraulic actuator, an electromechanical actuator, and a linear actuator.

According to some embodiments, systems are provided that include a platform configured to support a coordinate measurement device. The platform includes a base plate defining a stable mobile platform, at least one movement device configured to enable movement of the stable mobile platform, at least one stabilizing actuator configured to deploy a stabilizer to engage with a surface, the at least one stabilizing actuator moveable between a deployed state in which the stabilizer contacts a surface and a mobile state in which the at least one movement device contacts the surface, and a platform controller configured to drive movement of the stable mobile platform by controlling operation of the at least one movement device when the at least one stabilizing actuator is in the mobile state, and a mounting frame mounted on the base plate of the platform.

In addition to one or more of the features described above, or as an alternative, further embodiments of the systems may include a coordinate measurement device mounted to the mounting frame.

In addition to one or more of the features described above, or as an alternative, further embodiments of the systems may include that the coordinate measurement device is a laser tracker 3D coordinate measuring device.

In addition to one or more of the features described above, or as an alternative, further embodiments of the systems may include that the mounting frame is a tripod.

In addition to one or more of the features described above, or as an alternative, further embodiments of the systems may include a battery pack suspended from the tripod.

In addition to one or more of the features described above, or as an alternative, further embodiments of the systems may include at least one sensor configured to track a position of the stable mobile platform within an environment, wherein the at least one sensor is configured in communication with the platform controller.

In addition to one or more of the features described above, or as an alternative, further embodiments of the systems may include a remote computing system configured in communication with the platform controller, wherein the platform controller is configured to receive instructions from the remote computing system.

In addition to one or more of the features described above, or as an alternative, further embodiments of the systems may include that the platform controller is configured to autonomously control movement of the stable mobile platform when in the mobile state.

In addition to one or more of the features described above, or as an alternative, further embodiments of the systems may include an inertial movement unit mounted to the stable mobile platform and configured to track a position of the stable mobile platform and in communication with the platform controller.

These and other advantages and features will become more apparent from the following description taken in conjunction with the drawings.

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1A is an isometric illustration of a coordinate measurement device that may be employed with embodiments of the present disclosure;
FIG. 1B is an isometric illustration of the coordinate measurement device of FIG. 1A;
FIG. 1C is an alternative isometric illustration of the coordinate measurement device of FIG. 1A;
FIG. 2A is an isometric illustration of a battery pack for a coordinate measurement device in accordance with an embodiment of the present disclosure;
FIG. 2B a top down illustration of the battery pack of FIG. 2A;
FIG. 3A is a schematic illustration of a mounting frame for supporting and mounting a coordinate measurement device in accordance with an embodiment of the present disclosure;
FIG. 3B is a schematic illustration of the mounting frame of FIG. 3A having a coordinate measurement device mounted thereto;
FIG. 4A is an isometric illustration of a stable mobile platform for supporting a mounting frame in accordance with an embodiment of the present disclosure, with a mounting frame supported thereon;
FIG. 4B is a side elevation illustration of the stable mobile platform and mounting frame with the stable mobile platform in a mobile state;
FIG. 4C is a side elevation illustration of the stable mobile platform and mounting frame with the stable mobile platform in a deployed state; and
FIG. 5 is a side elevation illustration of an example alternative configuration in accordance with an embodiment of the present disclosure.

The detailed description explains embodiments of the invention, together with advantages and features, by way of example with reference to the drawings.

### DETAILED DESCRIPTION OF THE INVENTION

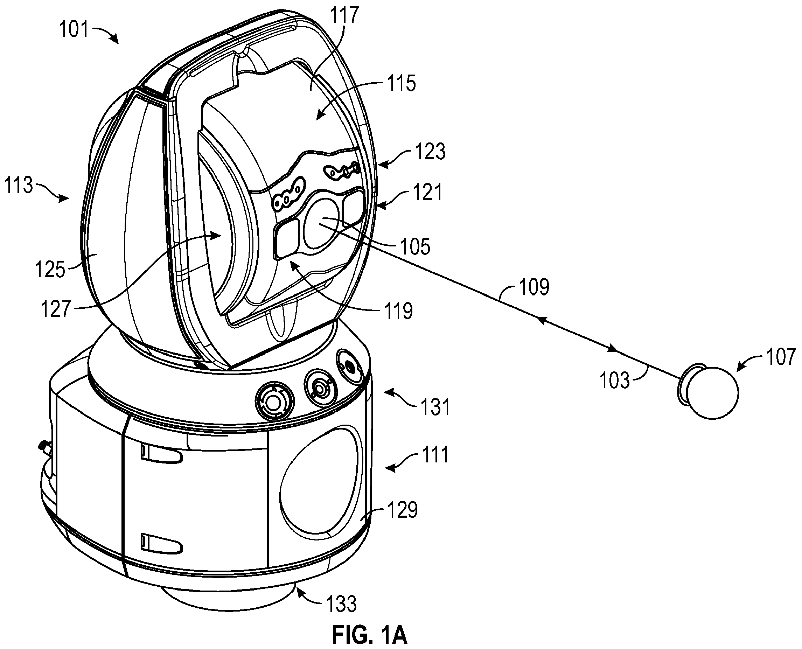

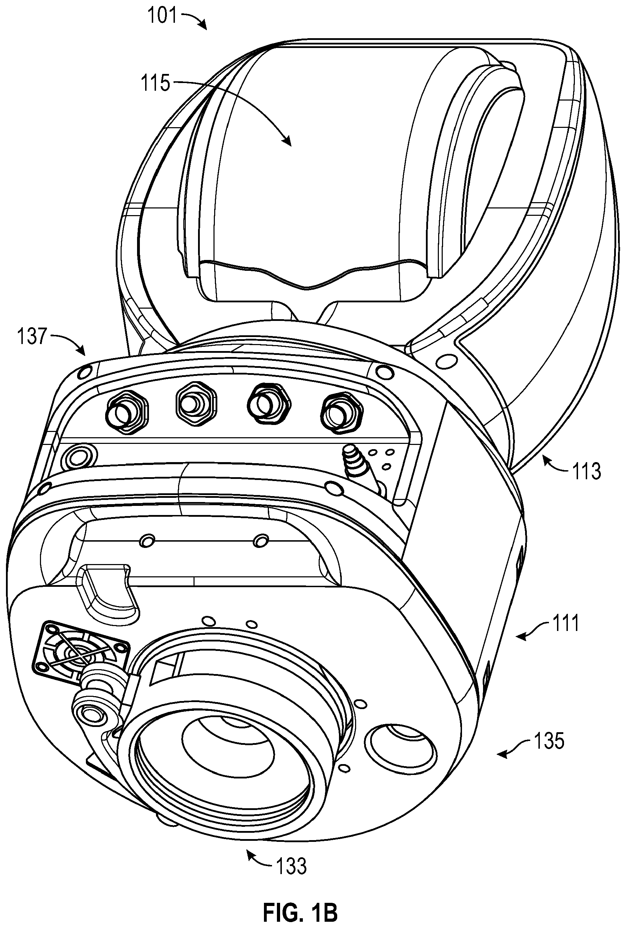

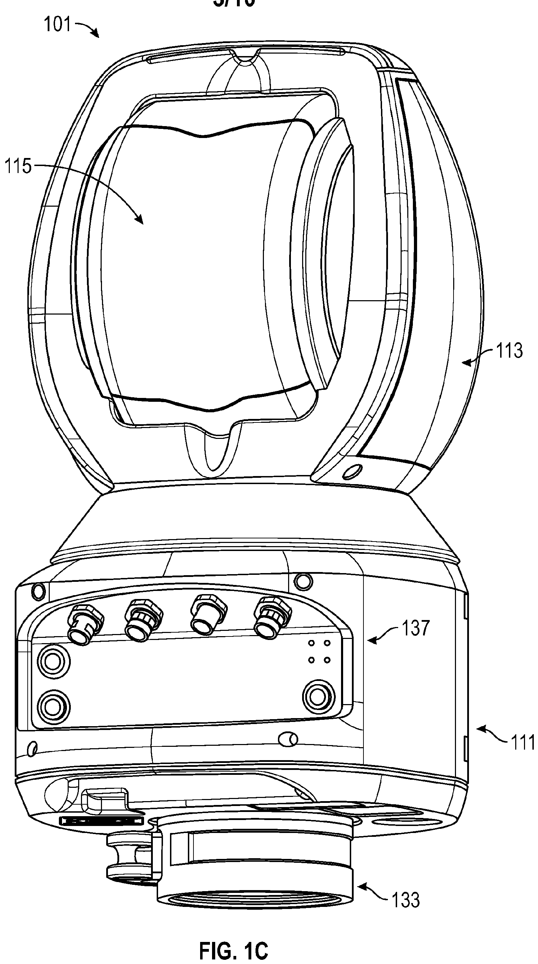

A coordinate measurement device 101 is shown in FIGS. 1A-1C. The coordinate measurement device 101 may be a laser tracker or other 3D coordinate measuring device. For example, the coordinate measurement device 101 may be a laser tracker in a general sense and may include a TOF scanner, a total station, or other related metrology or measurement device(s). A laser tracker does not necessarily launch light from a laser but instead may launch light from a superluminescent diode, a light emitting diode (LED), or other light source. Likewise if the coordinate measurement device 101 is a TOF scanner that measures distance and two angles to a point on an arbitrary surface, the TOF scanner may emit a laser beam, light from a superluminescent diode, an LED, or any other light source.

The coordinate measurement device 101 in FIGS. 1A-1C sends outgoing light 103 through an aperture 105 to a retroreflector 107, which returns the light along a parallel path as returning light 109, which passes a second time through the aperture 105. The coordinate measurement device 101 includes a base assembly 111, a yoke assembly 113, and a payload assembly 115. An outer portion of the payload assembly 115 includes a payload assembly cover 117, a first locator camera 119, a second locator camera 121, and payload indicator lights 123. In an embodiment, the payload indicator lights 123 may shine green to indicate found target, red to indicate measuring, and blue or yellow for user-definable or six-degree-of-freedom indications. An outer portion of the yoke assembly 113 includes a yoke-assembly cover 125 and yoke indicator lights 127. The yoke indicator lights 127 may advantageously be seen at relatively large distances from the tracker. An outer portion of the base assembly 111 includes a base-assembly cover 129 and a magnetic home-position nest 131 operable to hold SMRs of different diameters. In an embodiment, three magnetic home-position nests 131 are configured to accept SMRs having diameters of 1.5 inches, 0.875 inch, and 0.5 inch. A mandrel 133 may optionally be attached to a lower portion of the coordinate measurement device 101. The mandrel 133 may be configured to enable mounting and/or attachment of the coordinate measurement device 101 to a base, tripod, or other structure, as will be appreciated by those of skill in the art and as will be described in more detail herein.

The base assembly 111 includes a base pan 135, which may include a handle, an air intake, and a fan that serves as an air exhaust, as will be appreciated by those of skill in the art. In an embodiment, the base assembly 111 further includes an interface panel 137 having a number of buttons, ports, and indicator lights. Various features and aspects of the interface panel can include, without limitation, an on-off button and a Wi-Fi (IEEE 802.11) button. In some embodiments, indicator lights can be arranged on the interface panel 137 (or elsewhere on the base assembly 111) to indicate laser power, system health, tracker Ethernet (IEEE 802.3) activity, and/or six-DOF Ethernet activity, for example.

In some embodiments, for example, the interface panel 137 can include one or more ports for receiving cables. In one non-limiting example, a sensor port may accept an air temperature sensor cable, material temperature sensor cable, or other temperature sensor cable. The temperature sensor cable can attach to the interface panel 137 at a respective sensor port with a connector and may be configured to detect or sense temperatures with a cabled temperature sensor. Similarly, a material temperature sensor cable can attach to the interface panel 137 at a tracker temperature sensor port with a respective connector and be configured to sense material temperature with a cabled material temperature sensor. In some embodiments, the interface panel 137 can include a power-input port that receives power from a power cable, which can attach using a connector to the power-input port. The power cable may attach with another connector to an external power supply. In some embodiments, various ports of the interface panel 137 can provides communication connections (e.g., Ethernet) for bidirectional communication between a computing device and the coordinate measurement device 101. Additional ports can enable connection with an auxiliary box, which may provide auxiliary interface signals. The auxiliary interface signals can include power signals, trigger signals, synchronization (sync) signals, time signals (e.g., time stamp), with any of such signals being unidirectional or bidirectional. In some embodiments, the connections with the interface panel 137 can provide for industrial Ethernet having protocols that provide determinism and real-time control. Examples of protocols for industrial Ethernet include EtherCAT, EtherNet/IP, PROFINET, POWERLINK, SERCOS III, CC-Link IE, and Modbus/TCP.

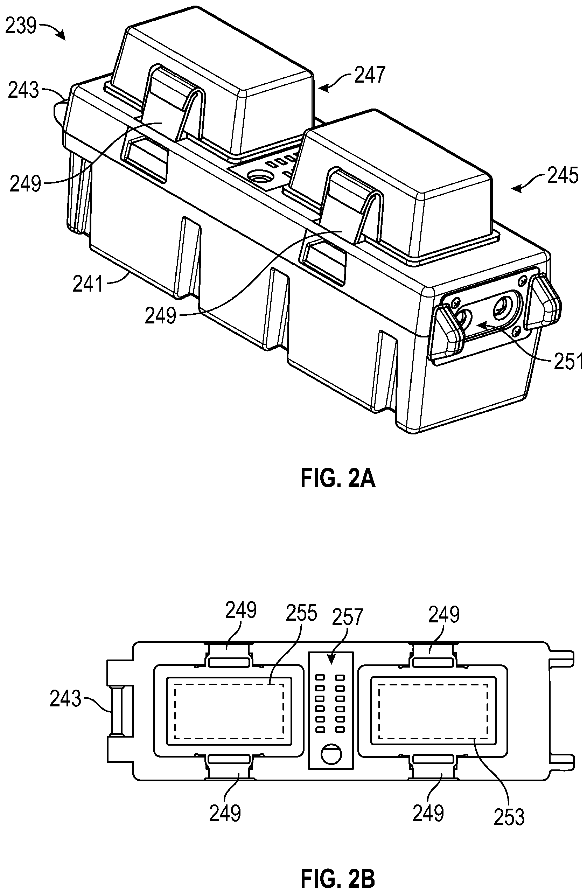

Turning to FIGS. 2A-2B, a battery pack 239 is used with a coordinate measurement device (e.g., coordinate measurement device 101 shown in FIGS. 1A-1C). In some embodiments, the battery pack 239 includes a battery enclosure 241, a battery handle 243, a first battery cover 245, a second battery cover 247, battery latches 249, and input/output ports 251. Also included in the battery pack are a first battery unit 253 and a second battery unit 255 held inside the battery enclosure 241. A top side of the battery enclosure 241 includes an interface panel 257 which may include, without limitation, an on/off button and indicator lights. For example, battery indicator lights can indicate the amount of power left in the battery units 253, 255 of the battery pack 239. In some embodiments, the power supplied from the two battery units 253, 255 may be depleted in parallel. In other embodiments, the power from the two battery units 253, 255 may be depleted one at a time (i.e., in series). In some embodiments, the battery units 253, 255 may be hot-swapped without first powering down the battery pack 239. This enables power to be continuously supplied to the coordinate measurement device even if one of the battery units 253, 255 must be replaced with a freshly charged battery unit.

In an example operation of a coordinate measurement device in accordance with an embodiment of the present disclosure, the battery pack 239 may be used stand-alone without being connected to an external power supply. In this mode of operation, the battery pack 239 can provide DC power through a port 251 (e.g., output) to the coordinate measurement device. In another mode of operation, the battery pack 239 may be configured to receive DC power from an external power supply. In this case, DC power may be provided from the external power supply to a port 251 (e.g., input) and pass through another port 251 (e.g., output) to provide DC power to the coordinate measurement device.

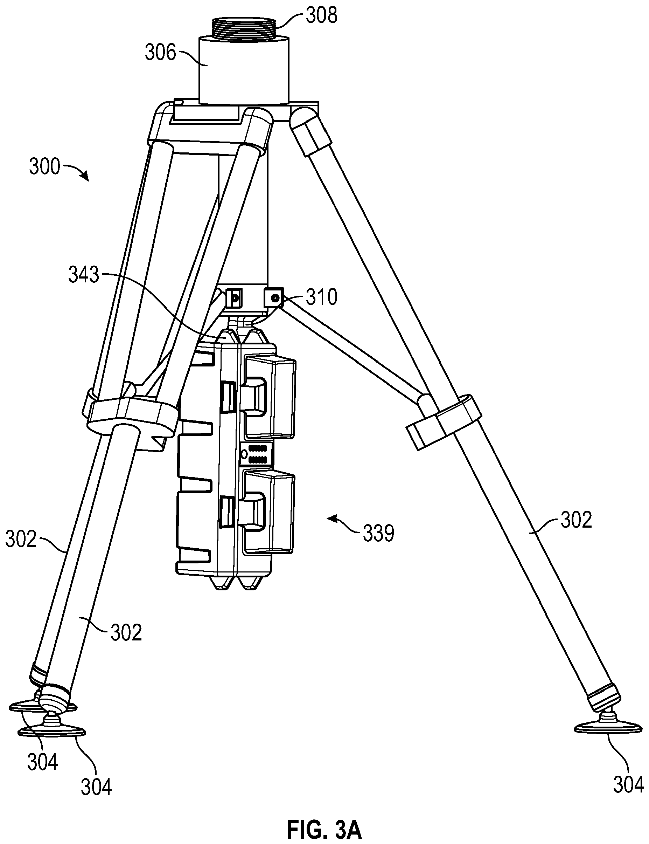

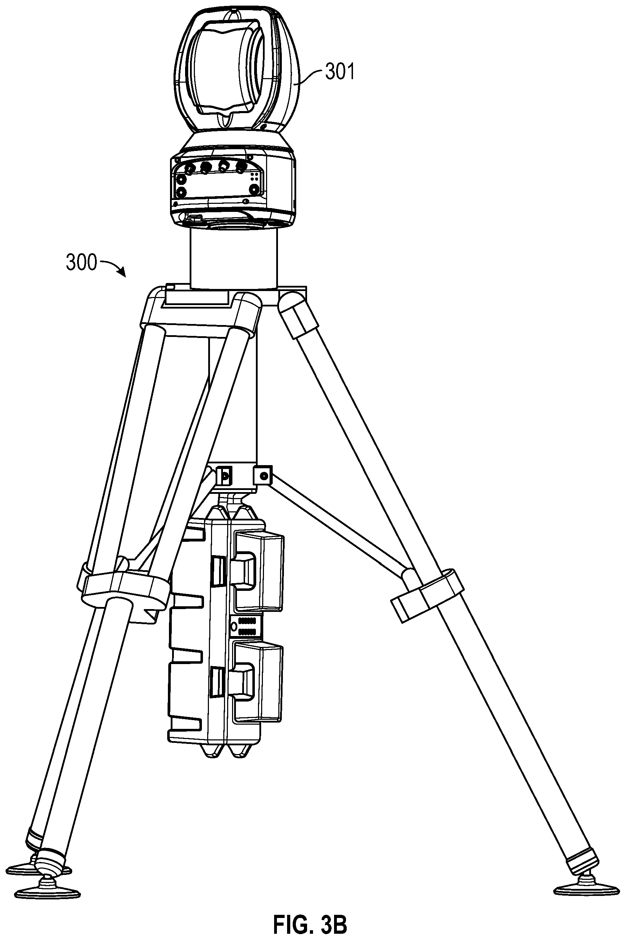

Turning now to FIGS. 3A-3B, a mounting frame 300 for mounting and supporting a coordinate measurement device 301 in accordance with an embodiment of the present disclosure is shown. In this embodiment, the mounting frame 300 is a tripod, although other configurations are possible without departing from the scope of the present disclosure. Accordingly, the mounting frame 300, illustratively shown, includes support legs 302 with support feet 304 on ends of the support legs 302. The support legs 302 and support feet 304 are configured to enable secure and stable support for the coordinate measurement device 301 that is mounted to the mounting frame 300 (shown in FIG. 3B). The support legs 302 and/or the support feet 304 may be adjustable (e.g., extendable, tiltable, rotatable, etc.) to provide for a desired placement and support for the coordinate measurement device 301. In some embodiments, the mounting frame 300 may be an industrial tripod.

The mounting frame 300 includes a device mounting head 306 having an engagement element 308 for engagement with the coordinate measurement device 301 to enable mounting of the coordinate measurement device 301 to the device mounting head 306. The engagement element 308 can be threaded connection, a quick-release mechanism, a pin-lock connection, or other connection as will be appreciated by those of skill in art. To provide additional stability and lower a center of gravity of the tripod, when the coordinate measurement device 301 is mounted thereto, in some embodiments, a battery pack 339 may be connected to and suspended from the mounting frame 300. The battery pack 339 may be substantially similar to that shown and described above with respect to the FIGS. 2A-2B.

As shown in FIG. 3, a battery handle 343 of the battery pack 339 can be hung from a tripod hook 310 of the mounting frame 300. As noted, the coordinate measurement device 301 can be coupled to the mounting frame 300 through device mounting head 306 at the engagement element 308. In addition to provided additional weight, stability, and lowering the center of gravity, hanging the battery pack 339 from the mounting frame 300 can provide an advantage in reducing the number of components in a limited work area (i.e., eliminating extraneous cords and cables to supply power and communication with the mounted coordinate measurement device 301).

In addition to being stationary for a given scanning or imaging operation, it may be advantageous to move the coordinate measurement device mounted to the tripod. Typically, such movement can impact the scanning errors, and thus recalibration may be required. Further, moving the system may require disassembly and reassembly at a new location, which can be time consuming and intensive. Accordingly, embodiments of the present disclosure are directed to provide improved systems for enabling movement of tripod-mounted coordinate measurement devices.

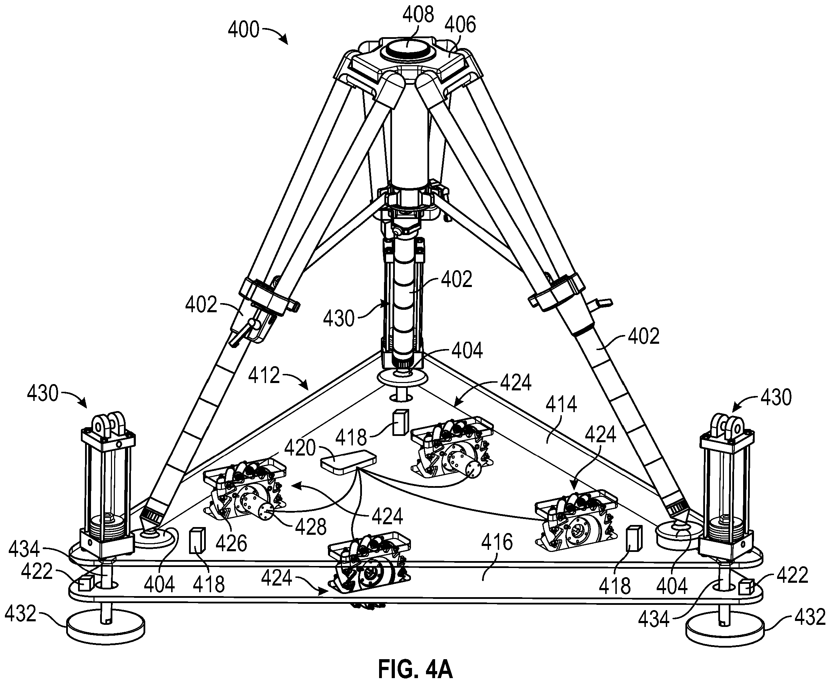

Turning now to FIGS. 4A-4C, schematic illustrations of a stable mobile platform 412 for use with a coordinate measurement device that is mounted to a mounting frame 400 in accordance with an embodiment of the present disclosure is shown. The mounting frame 400 may be substantially similar to that shown and described with respect to FIGS. 3A-3B, and thus is a tripod configuration. The mounting frame 400 is configured to receive and support a coordinate measurement device (not shown for simplicity). The mounting frame 400 may be stably mounted to the stable mobile platform 412 to enable stable movement of the mounting frame 400 and an attached coordinate measurement device.

The mounting frame 400 includes a plurality of support legs 402 having support feet 404 on ends thereof. The mounting frame 400 includes a device mounting head 406 having an engagement element 408 for engagement with a coordinate measurement device to enable mounting of the coordinate measurement device to the device mounting head 406. The engagement element 408 can be threaded connection, a quick-release mechanism, a pin-lock connection, or other connection as will be appreciated by those of skill in art. To provide additional stability and lower a center of gravity of the tripod, when the coordinate measurement device is mounted thereto, in some embodiments, a battery pack may be connected to and suspended from the mounting frame 400, as shown and described above.

The stable mobile platform 412 is a dual-platform configuration having a base plate 414 and a support plate 416. As shown, the stable mobile platform 412 is a triangular shape to enable mounting of the mounting frame 400. The base plate 414 is fixed attached to or connected to the support plate 416 by one or more plate connectors 418. The base plate 414 provides a relatively smooth and flat surface for placement and supporting of the support feet 404 of the mounting frame 400. The support plate 416 can provide additional rigidity and support to the base plate 414. The support plate 416 may also provide a surface or area for mounting components of the stable mobile platform 412. Although shown herein with two plates (414, 416) that are fixedly connected by plate connectors (418), such configuration is not to be limiting. For example, as will be readily appreciated, a single plate (i.e., the base plate 414) may be provided to support and contain all the features described herein. Moreover, additional plates or support plates may be implemented beyond just two, depending on various factors, including but not limited to, weight, structural rigidity, weight tolerance, etc. In embodiments with a single plate forming stable mobile platform, the various components may be fixedly mounted to or connected to the single plate.

As shown, mounted to the support plate 416 are a platform controller 420, sensors 422, and movement devices 424. The platform controller 420 may be operably connected to and/or in communication with the sensors 422, the movement devices 424, a coordinate measurement device mounted to the mounting frame 400, to a remote computing system, or to other components as will be appreciated by those of skill in the art. The platform controller 420 can be configured communicate over wired or wireless communication protocols/components with one or more of elements that are operably connected and/or in communication therewith. The movement devices as employed in some embodiments of the present disclosure can be configured to provide micrometer stability, such that during movement the platform remains stable with little to no fluctuation in stability.

The sensors 422 may be proximity sensors that are configured to detect the position of the stable mobile platform 412 relative to an environment around the stable mobile platform 412. For example, the sensors 422 may be configured to detect proximity to various structures of features that are external to the stable mobile platform 412 and to ensure that during movement of the stable mobile platform 412 the stable mobile platform 412 does not run into or otherwise contact any external elements inadvertently or unintentionally. Although shown with only two sensors 422 arranged at corners of the support plate 416, those of skill in the art will appreciate that a third sensor may be arranged at the corner not visible in FIG. 4A. Moreover, although shown and described with a specific configuration of sensors 422, those of skill in the art will appreciate that any number of sensors may be employed, and in some embodiments the sensors could be completely optional or omitted. Further, although described as proximity sensors, other types of sensors, and/or combinations of sensors, can be employed without departing from the scope of the present disclosure. Further, in some embodiments, sensors may be located at other positions on the support plate 416, and still further, in some embodiments, sensors may be mounted to or affixed to the base plate 414. The sensors 422 may be operably connected to and/or in communication with the platform controller 420. In some embodiments, the sensors 422 may be two-dimensional safety sensors.

In some embodiments, the platform controller 420 and/or the sensors 422, or other components, may be configured to monitor the position of the stable mobile platform 412. For example, the platform controller 420 may be configured with or as a tracking system. In some embodiments, a tracking system may be implemented externally from the platform controller 420, such as a stand-alone unit or in combination/connection with the sensors 422. The tracking aspect may be implemented as an inertial movement unit, as will be appreciated by those of skill in the art. In some embodiments, the tracking can be employed to enable autonomous movement of the stable mobile platform 412. For example, a pre-programmed movement or travel instruction may be executed using the platform controller 420, with determinations of position within a given space based, at least in part, upon information from the tracking capabilities of the stable mobile platform 412. Further, in some embodiments, the tracking information may be incorporated into or integrated into data collection from a coordinate measurement device mounted to the mounting frame 400. In some embodiments, the tracking can be achieved through use of an accelerometer and/or compass integrated into, connected to, and/or in communication with the platform controller 420.

In the illustrative embodiment of FIGS. 4A-4C, the movement devices 424 each include a roller element 426 and a drive element 428. The roller elements 426 may be an omnidirectional rolling units that enable movement in all directions (two dimensional movement on a floor or other surface). The drive elements 428 may be motors that are operably connected to and/or in communication with the platform controller 420 and are configured to drive respective roller elements 426. The movement devices 424 can be controlled to enable movement of the stable mobile platform 412 and anything mounted or supported thereon, such as the mounting frame 400 and a coordinate measurement device attached thereto. The roller elements 426 may be Mecanum wheels to provide omnidirectional locomotion to provide maneuverability to the system. As will be appreciated by those of skill in the art the Mecanum wheels may also be referred to as Mechanum wheels, Ilon wheels, Swedish wheels, or generally omni-wheel. In some embodiments, the roller elements 426 may include a series of free moving rollers attached to a hub with an angle of about 45° to the circumference of the hub, and yet provide for a generally circular side profile to the wheel. In other embodiments, the movement devices 424 may be configured as traditional wheels, balls/spheres, treads, or other configurations of locomotion.

In operation, the stable mobile platform 412 will be operated, at least in part, by the platform controller 420. The platform controller 420 may receive information from the sensors 422 and other sources of information (e.g., external computing systems, etc.) to drive and move the stable mobile platform 412. As will be appreciated by those of skill in the art, the movement devices 424 must be in contact with a surface to provide mobility and move over the surface. However, when a specific or desired location is reached and imaging or other sensing is desired using a coordinate measurement device mounted on the mounting frame 400, it may no longer be desirable for the movement devices 424 to be in contact with a surface.

Accordingly, the stable mobile platform 412 is configured with stabilizing actuators 430. The stabilizing actuators 430 may be operably connected to or in communication with the platform controller 420 and are operable to deploy stabilizers 432 which may be affixed to piston rods 434. The stabilizers 432 may be pads or other footing structure or device that can be engaged with a surface to enable a stable and firm engagement therewith. The piston rods 434 are moveable by actuation to move the stabilizers 432 toward or away from the support plate 416 (i.e., deployable toward or away from a surface to be engaged with). The piston rods 434 may be actuated upward relative to the base plate 414 to cause movement of the stabilizers 432. The stabilizers 432 may be hingedly, rotatably, or pivotably attached to or connected to the piston rods 434 to allow for engagement with uneven surfaces and allow for a stable engagement of the entire stable mobile platform 412 to the surface.

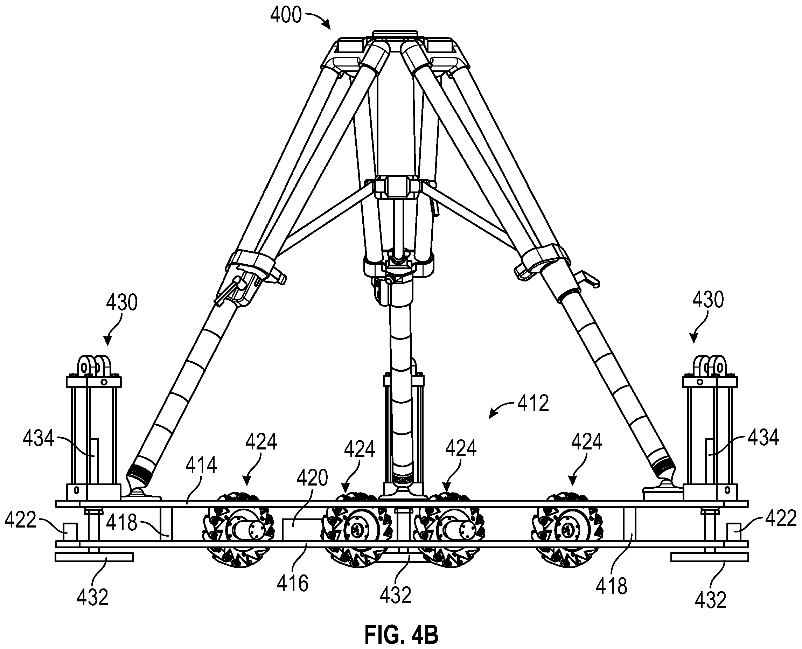

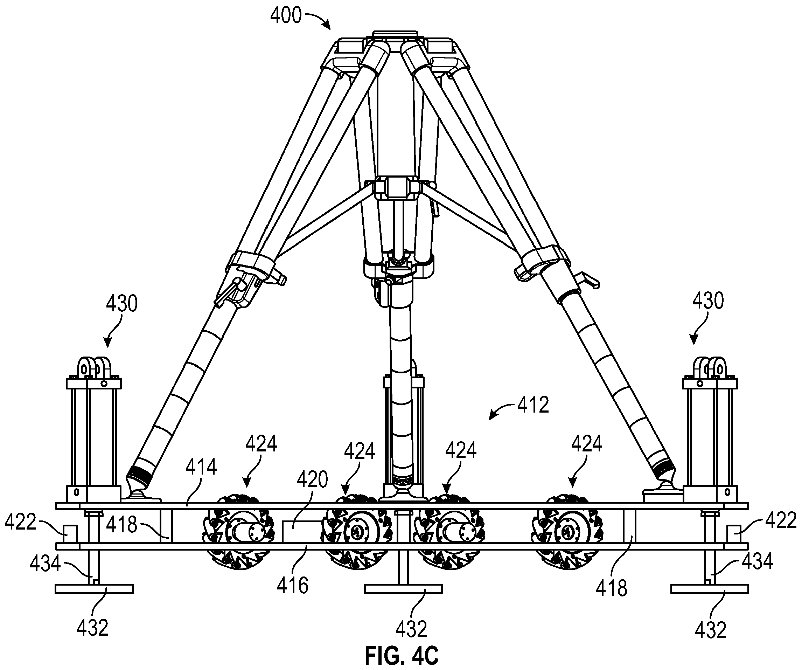

FIGS. 4B-4C illustratively show the stable mobile platform 412 in a mobile state (FIG. 4B) and in a deployed state (FIG. 4C). As shown in FIG. 4B, in the mobile state, the stabilizers 432 are positioned close to the support plate 416 such that the movement devices 424 extend further away from the support plate 416 and thus can contact a surface to enable movement of the stable mobile platform 412. In FIG. 4C, the stabilizers 432 of the stabilizing actuators 430 are extended to a distance farther than the movement devices 424 and thus can contact a surface and lift the stable mobile platform 412 relative to the surface. During this actuation, the stabilizing actuators 430 will cause the movement devices 424 to lift away from the surface and thus not be in contact therewith. In the deployed state (FIG. 4C), the stabilizers 432 provide the contact of the stable mobile platform 412 with a surface, and provide stable support and positioning thereof. As such, in the deployed state shown in FIG. 4C, a coordinate measurement device mounted to the mounting frame 400 may be held in a stationary and deployed state such that no or minimal (within error) impact from the mounting frame 400 and/or the stable mobile platform 412 will be realized.

The stabilizing actuators 430 may be any type of actuator as known in the art. For example, linear actuators, hydraulic actuators, electromechanical actuators, etc. may be employed without departing from the scope of the present disclosure. The stabilizing actuators 430 may be operable through control commands received from the platform controller 420 or other computing and/or control device. In some embodiments, the platform controller 420 can provide for programmed or automated movement and deployment, which may be, in some embodiments, pre-programmed into or onto the platform controller 420. In other embodiments, the platform controller 420 may provide an interface or intermediary connection between an external device and the operation of the movement devices 424 and/or the stabilizing actuators 430. Further, in some embodiments, the stable mobile platform 412 can be controlled remotely by an operator, such as by use of a joystick or other controller (e.g., general purpose computer, handheld device, etc.).

Although the present disclosure has been made with respect to a tripod mounted to the stable mobile platform for supporting a coordinate measurement device, those of skill in the art will appreciate that this is merely an example, and is not to be limiting. For example, in another embodiment a single stand or rod may be mounted/affixed to the stable mobile platform, and support a coordinate measurement device.

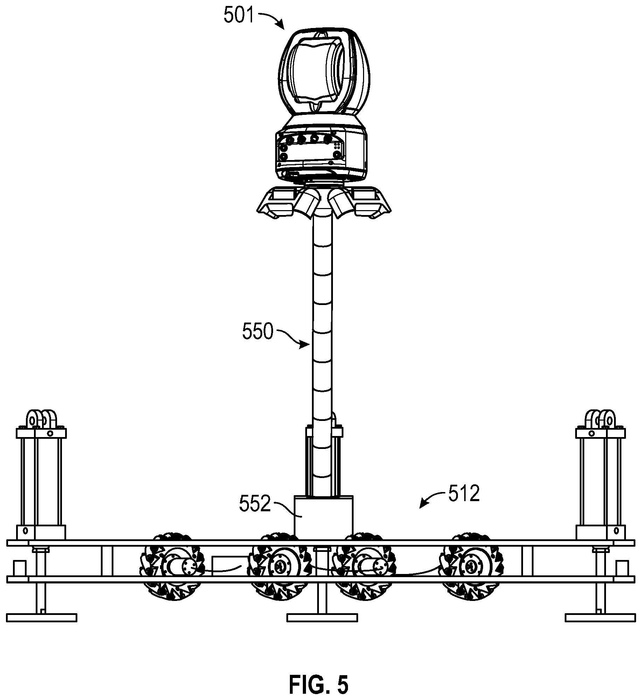

For example, turning to FIG. 5, a schematic illustration of a stable mobile platform 512 with a coordinate measurement device 501 mounted thereto is shown. In this embodiment, the stable mobile platform 512 is substantially similar to that shown and described above. However, in this embodiment, the coordinate measurement device 501 is mounted to the stable mobile platform 512 using a mounting frame 550 in the form of a single rod or pole. The mounting frame 550 includes a frame base 552 that can be fixedly connected to the stable mobile platform 512 to provide a fixed and secure connection to the stable mobile platform 512. Accordingly, such mounting frame 550 can provide a stable and fixed, yet mobile, platform for the coordinate measurement device 501.

Although shown and described with respect to a triangular stable mobile platform various other geometric shapes may be implemented without departing from the scope of the present disclosure. For example, circular or square platforms may be employed, with an appropriate number of stabilizing actuators and movement devices (e.g., omnidirectional wheels or other locomotion means) configured therewith.

Advantageously, embodiments described herein provide for a stable mobile platform for use with a coordinate measurement device. The stable mobile platform provides for mobility with respect to the coordinate measurement device within an environment while maintaining stability, and further enables deployment to provide a secure and supported position for operating the coordinate measurement device. Furthermore, in some embodiments, autonomous operation may be implemented with the stable mobile platform of the present disclosure. For example, a platform controller may be programmed to perform a predefine movement within a space based on tracking and/or proximity sensing. Further, in some embodiments, the platform controller can enable communication with a remote or connected controller (e.g., joystick) such that an operator can control movement and operation of the stable mobile platform and a coordinate measurement device mounted thereto.

While the present disclosure has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A platform configured to support a coordinate measurement device, the platform comprising:
a base plate defining a stable mobile platform;
at least one movement device configured to enable movement of the stable mobile platform;
at least one stabilizing actuator configured to deploy a stabilizer to engage with a surface, the at least one stabilizing actuator moveable between a deployed state in which the stabilizer contacts a surface and a mobile state in which the at least one movement device contacts the surface; and
a platform controller configured to drive movement of the stable mobile platform by controlling operation of the at least one movement device when the at least one stabilizing actuator is in the mobile state.

2. The platform of claim 1, further comprising a coordinate measurement device mounted to the base plate.

3. The platform of any preceding claim, wherein the base plate is triangular in shape, preferably, comprising three stabilizing actuators, wherein one stabilizing actuator is positioned at each corner of the triangular shape on the base plate.

4. The platform of any preceding claim, further comprising at least one sensor configured to track a position of the stable mobile platform within an environment, wherein the at least one sensor is configured in communication with the platform controller.

5. The platform of claim 4, wherein the at least one sensor is at least one of a proximity sensor and an inertial movement unit.

6. The platform of any preceding claim, further comprising a support plate arranged proximate to the base plate and connected to the base plate by at least one plate connector to form a stable mobile platform, preferably, further comprising at least one sensor configured to track a position of the stable mobile platform within an environment, wherein the at least one sensor is configured in communication with the platform controller, wherein the at least one sensor is mounted to the support plate.

7. The platform of any preceding claim, wherein the at least one movement device is selected from an omni-directional wheel, a mecanum wheel, and a roller element and a drive element, preferably, wherein the drive element is configured in communication with the platform controller.

8. The platform of any preceding claim, wherein the at least one stabilizing actuator is one of a hydraulic actuator, an electromechanical actuator, and a linear actuator.

9. A system comprising:
a platform in accordance with any preceding claim; and
a mounting frame mounted on the base plate of the platform.

10. The system of claim 9, further comprising a coordinate measurement device mounted to the mounting frame, preferably, wherein the coordinate measurement device is a laser tracker 3D coordinate measuring device.

11. The system of any of claims 9-10, wherein the mounting frame is a tripod.

12. The system of claim 11, further comprising a battery pack suspended from the tripod.

13. The system of any of claims 9-12, further comprising a remote computing system configured in communication with the platform controller, wherein the platform controller is configured to receive instructions from the remote computing system.

14. The system of any of claims 9-13, wherein the platform controller is configured to autonomously control movement of the stable mobile platform when in the mobile state.

15. The system of any of claims 9-14, further comprising an inertial movement unit mounted to the stable mobile platform and configured to track a position of the stable mobile platform and in communication with the platform controller.
